# EUROPEAN PATENT APPLICATION

(11) **EP 1 701 032 A1**
(43) Date of publication of application: **13.09.2006**
(21) Application number: 06004152.2
(22) Date of filing: 01.03.2006
(51) Int. Cl.: F02M 59/46, F04B 53/10, F16K 15/04, F02M 63/02

(54) **Check valve for fuel pump**

(30) Priority: 01.03.2005 JP 2005055500
(71) Applicant: JTEKT CORPORATION, Chuo-ku Osaka-shi Osaka 542-8502 (JP)
(72) Inventor: Ono, Hiroshi, Chuo-ku Osaka-shi Osaka 542-8502 (JP); Fujii, Yoshiki, Chuo-ku Osaka-shi Osaka 542-8502 (JP); Hattori, Tomoya, Chuo-ku Osaka-shi Osaka 542-8502 (JP); Yamakawa, Koshiro, Chuo-ku Osaka-shi Osaka 542-8502 (JP)
(74) Representative: Weber, Joachim

(57) **Abstract**

A check valve for a fuel pump, includes: a seat face formed on a fuel passage; a valve member that includes a ball made of ceramics and is adapted to approach and leave the seat face; and a spring for biasing the ball toward the seat face. The fuel passage is closed when the ball is seated on the seat face, and the fuel passage is opened when the ball is brought apart from the seat face by a pressure generated against the biasing force of the spring. The ball seating portion of the seat face is formed into a curved face having a larger curvature than that of the ball, so that the ball and the seat face come into a band-shaped contact at the seating time.

## Description

### BACKGROUND OF THE INVENTION

The present invention relates to a check valve for a fuel pump and, more particularly, to a check valve suited for use as a discharge valve of a high-pressure fuel pump for a Diesel engine of a common rail type or the like.

Generally in the high-pressure fuel pump for the Diesel engine of the common rail type, for example, a fuel sucked into a pump chamber is pressurized so to be fed through a discharge value to the common rail when the fuel pressure exceeds the closing pressure of the discharge value (as referred to Patent Publication 1, for example).

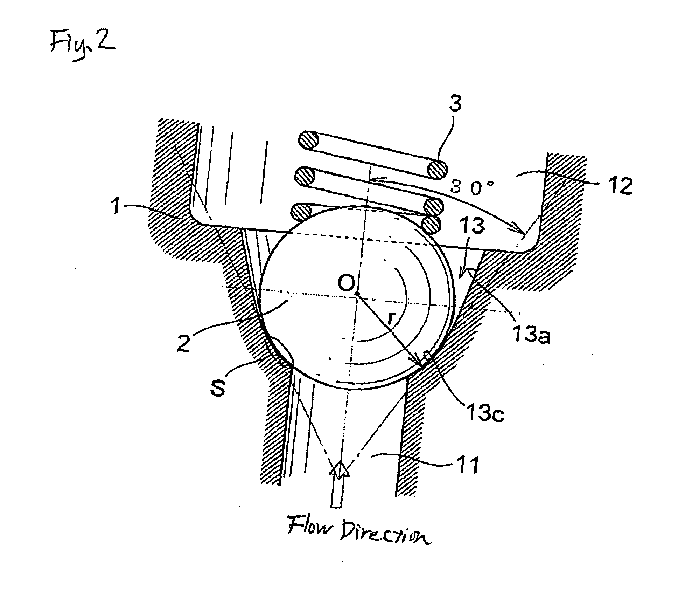

In this Patent Publication 1, there is disclosed a construction of the high-pressure fuel pump, as schematically shown in Fig. 4. In Fig. 4, reference numeral 41 designates a camshaft, which is rotated by the rotation of an engine. As this camshaft 41 rotates, an eccentric cam 42 integrated with the camshaft 41 reciprocates a plunger 45 in a pump chamber 44 formed in a cylinder 43. The inside of the pump chamber 44 is fed with a fuel in a fuel tank 47 by a feed pump 46 through a metering valve 48 and an intake valve 49, so that the fuel in the pump chamber 44 is pressurized by the reciprocations of the plunger 45. When the pressure of the fuel exceeds the opening pressure of a discharge valve 50, the high-pressure fuel is pumped to the common rail through that discharge valve 50.

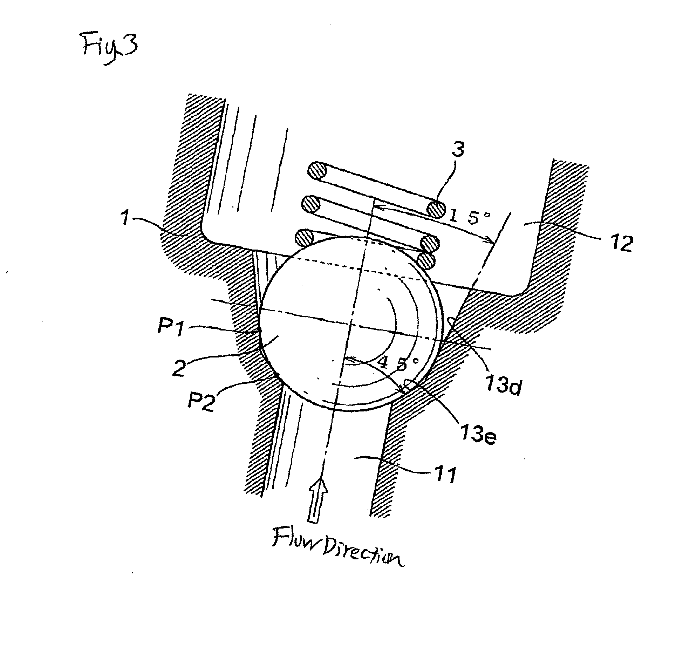

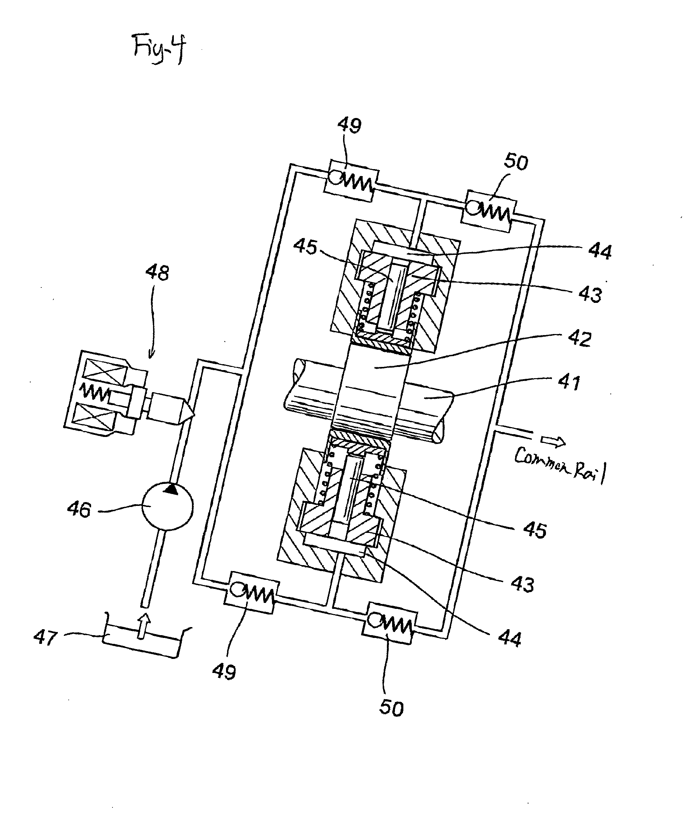

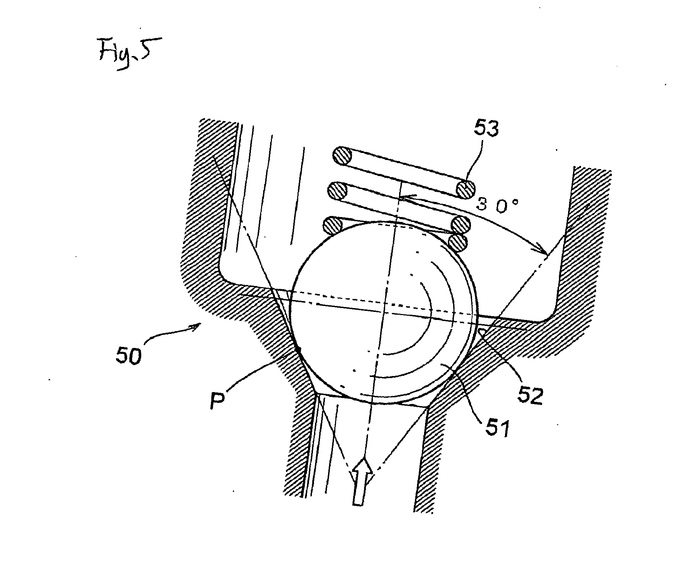

In the construction thus far described, check valves individually having balls as their valve members are used. Especially in the discharge valve, an extremely high pressure difference is established across the ball. Specifically, the valve closing pressure is set at an extremely high level. In order to endure this valve closing pressure, in the check valve composing the discharge valve 50, a ball 51 used as the valve member is made of ceramics of silicon nitride, which is excellent in strength/durability, as an essential portion is shown in section in Fig. 5. In the construction adopted, the ball 51 is pushed, by a compression coil spring 53 for determining the valve closing pressure, onto a seat face 52, which is made of a conical face having an apex angle of about 60 degrees.
Patent Publication 1: JP-A-2004-124727

Here, the check valve for the fuel pump of the related art thus far described is closed when the ball 51 comes into abutment against the conical seat face 52. As described above, however, the extremely high pressure difference as high as 1,800 atoms is established across the ball 51. It is estimated that a fuel pump for establishing a higher pressure difference will be put into practice.

The ceramic ball basically has a strength/durability capable enduring the stress which acts when it is pushed onto the seat face by the valve opening pressure corresponding to such pressure. Because of the method of manufacturing the ceramic ball, as including a sintering step under pressure, however, the dispersion of the strength is so relatively serious as to cause a cracking by the aforementioned stress, although seldom.

### SUMMARY OF THE INVENTION

The invention has been conceived in view of such background, and has an object to provide a check valve for a fuel pump, in which the ceramic ball is less cracked than that of the check valve of the related art.

In order to solve the aforesaid object, the invention is characterized by having the following arrangement.
(1) A check valve for a fuel pump, comprising:
   a seat face formed on a fuel passage;
   a valve member that includes a ball made of ceramics and is adapted to approach and leave the seat face; and
   a spring for biasing the ball toward the seat face,
   wherein the fuel passage is closed when the ball is seated on the seat face, and the fuel passage is opened when the ball is brought apart from the seat face by a pressure generated against the biasing force of the spring, and
   wherein the ball seating portion of the seat face is formed into a curved face having a larger curvature than that of the ball, so that the ball and the seat face come into a band-shaped contact at the seating time.
(2) The check valve according to (1), wherein the curved face is a shape of an annular face having a larger curvature than that of the ball.
(3) The check valve according to (1), wherein the curved face is a spherical shape having a large curvature than that of the ball.
(4) The check valve according to (3), wherein the spherical face forming the ball seating portion of the spherical face is formed by a ball sizing.
(5) A check valve for a fuel pump, comprising:
   a seat face formed on a fuel passage;
   a valve member that includes a ball made of ceramics and is adapted to approach and leave the seat face; and
   a spring for biasing the ball toward the seat face,
   wherein the fuel passage is closed when the ball is seated on the seat face, and the fuel passage is opened when the ball is brought apart from the seat face by a pressure generated against the biasing force of the spring, and
   wherein a portion of the seat face on which the ball is seated includes at least two conical faces having different apex angles and formed coaxially with the approaching and leaving direction of the ball, so that the ball makes, when seated, linear contact with at least two of the individual conical faces.

The invention contemplates to solve the problem by damping the stress which occurs at the contact portion of the ball and the seat face while the ball is seated on the seat face.

In the invention according to (1), more specifically, the shape of the ball seating portion of the seat face is formed into such a curved face shape in place of the conical face of the related art as has a larger curvature than that of the ball so that the ball and the seat face may contact in the band shape with each other at the seating time. As a result, the contact area between the ball and the seat face is larger than that of the related art so that the stress to occur at the contact portion can be reduced, even when the ball is pushed under a valve closing pressure equivalent to that of the related art, thereby to suppress occurrence of the cracking of the ball.
In the invention according to (2), since the curved face is a shape of an annular (torus) face having a larger curvature than that of the ball, in the same manner as the above (1), the contact area between the ball and the seat face is larger than that of the related art so that the stress to occur at the contact portion can be reduced, thereby to suppress occurrence of the cracking of the ball.

In the invention according to (3), the shape of the ball seating portion of the seat face is formed into a spherical shape having a larger curvature than that of the ball. At the seating time, like before, the ball and the seat face are brought into contact in the band shape to increase the contact area so that the stress to act at the seating time is reduced to suppress the occurrence of the cracking of the ball.

In addition to the stress damping by increasing the contact area between the ball and the seat face, as described above, in the invention according to (4), the shearing stress to act on the ball is damped by reducing the surface roughness of the seat face at the ball seating portion, so that the occurrence of the cracking of the ball due to the shearing stress is also suppressed. If the surface roughness of the ball seating portion of the seat face is rough, more specifically, a high frictional force is established at the ball seating time, and the high shearing stress may act on the ball thereby to crack the ball. In the invention according to (1), (2) and (3), in which the ball seating portion of the seat face has the curved shape, the annular face or the spherical face is formed by the ball sizing. As a result, the surface roughness of the spherical face can be reduced to reduce the friction coefficient between the spherical face and the ball thereby to reduce the shearing stress to act on the ball.

In the invention according to (5), the ball seating portion of the seat face is shaped to have at least two conical faces made coaxial to have different apex angles, so that the ball is brought at the seating time into linear contact with at least two of the conical faces. With this construction, the stress to occur at the contact portion can be more damped than that of the case of the related art, in which the ball of the check valve makes linear contact with one conical face, thereby to suppress the cracking of the ball.

According to the invention, the shape of the ball seating portion for the seat face is formed either into curved face, that is, the annular face shape having a larger curvature than that of the ball or into the spherical shape having a larger curvature than that of the ball so that the ball and the seat face may be brought at the seating time into the band-shaped contact. Moreover, the shape of the ball seating portion for the seat face is formed into the shape composed of at least two conical faces coaxial with each other and having different apex angles so that the ball may come at the seating time into the linear contact with both of at least of the conical faces. As a result, the stress to act when the ball is seated on the seat face can be made smaller than that of the related art so that the occurrence of the cracking of the ceramic ball can be suppressed to improve the durability.

As in the invention according to (4), the surface of the ball seating portion of the seat face is formed by the ball sizing so that the surface roughness of the seating portion can be reduced to lower the friction coefficient between the ball and the sear face thereby to damp the shearing stress to act on the ball. As a result, the occurrence of the cracking of the ball, as might otherwise be caused by the shearing stress, can be suppressed to improve the durability.

### BRIEF DESCRIPTION OF THE DRAWINGS

Fig. 1 is a sectional view of an essential portion of an embodiment of the invention;
Fig. 2 is a sectional view of an essential portion of another embodiment of the invention;
Fig. 3 is a sectional view of an essential portion of still another embodiment of the invention;
Fig. 4 is a schematic diagram showing an example of the construction of a high-pressure fuel pump; and
Fig. 5 is a sectional view showing a construction of an essential portion of a check valve as an intake valve used in the high-pressure fuel pump of Fig. 4.

### DETAILED DESCRIPTION OF PREFERRED EMBODIMENTS

Embodiments of the invention are described in the following with reference to the accompanying drawings.

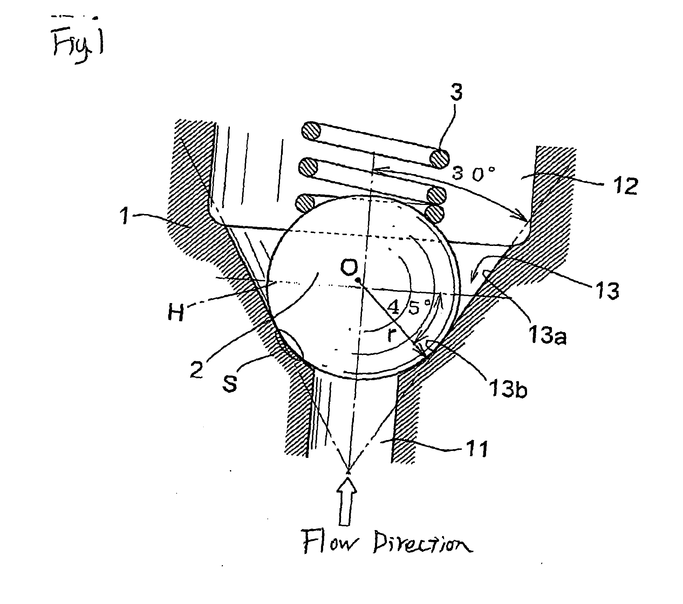

Fig. 1 is a sectional view showing the construction of an essential portion of an embodiment of the invention.

A check valve body 1 has a structure, in which a seat face 13 is formed between an upstream fuel passage 11 and a downstream fuel passage 12, and a ball 2 made of ceramics is pushed as a valve member by a compression coil spring 3 so that it is seated on the seat face 13. The fuel passage is closed when the ball 2 is seated on the seat face 13, as shown. When the difference between the pressure in the upstream fuel passage 11 and the pressure in the downstream fuel passage 12 rises to exceed the force pushing the ball 2 by the compression coil spring 3, the ball 2 leaves the seat face 13 to open the fuel passage.

Here, the seat face 13 is composed of a conical face 13a of an apex angle of 60 degrees and an annular (torus) face 13b tangent to the conical face 13a, and the ball 2 is seated on the annular face 13b. This annular face 13b has a radius r of curvature as large as 55 % of the diameter of the ball 2. This annular face 13b can be formed, for example, by using a cutting tool having an edge shape formed into a portion of the circle of the radius r, while rotating the check valve body 1 on its axis, and by feeding the cutting tool so far that the center of the curvature finally reaches the position designated by O in Fig. 1.

According to the embodiment of the invention described above, the ball 2 is so seated on the annular face 13b as to contact with a band-shaped area S centering the position of 45 degrees with respect to a horizontal line indicated by H in Fig. 1. Even if, therefore, the ball 2 is pushed onto the seat face 13 by such a corresponding force with the compression coil spring 3 as to close the fuel passage up to a high pressure of about 1,800 atms, for example, the stress to act on the ball 3 can be made lower than that of the related art so that the cracking of the ball 2 can be suppressed to improve the durability.

Another embodiment of the invention is described in the following. Fig. 2 is a sectional view of an essential portion of the embodiment.
This embodiment is characterized in that the seat face 13 is composed of the conical face 13a of the apex angle of 60 degrees and a spherical face 13c tangent to the conical face 13a. The radius r of curvature of the spherical face 13c is as large as 55 % of the diameter of the ball 2. The spherical face 13b in this embodiment is obtained, for example, by using a cutting tool formed into a portion of the circle of a radius of curvature smaller by about several *µ*m to about 10 *µ*m than the radius r, while rotating the check valve body 1 on its axis, to cut the check valve body 1 so that the center of curvature may reach the position designated by O in Fig. 1, and then by a ball sizing using a ball of the radius r. By this ball sizing work, the spherical face 13c can be given a surface roughness of Rz5 or less.

In this embodiment shown in Fig. 2, the ball 2 is seated on the spherical face 13c in the band-shaped area designated by S in Fig. 2, so that the stress to act on the ball 2 can be made lower than that of the related art thereby to prevent the cracking of the ball 2. At the same time, the spherical face 13c is finally finished by the ball sizing work to the surface roughness of Rz5 or less, so that the coefficient of friction between the spherical face 13c and the ball 2 can be made less than that of the related art. As a result, the shearing stress to act on the ball 2 when the ball is seated on the seat face 13, and the cracking of the ball, which might otherwise be caused by the shearing stress, can also be suppressed to improve the durability.

Here in the individual embodiments thus far described, the radius r of curvature of the annular face 13b and the spherical face 13c is set as large as 55% of the diameter of the ball 2, but should not necessarily be limited to that ratio. In short, the radius of curvature may permit the ball to be seated on the annular face 13b or the spherical face 13c while contacting in the band shape. Moreover, the method of working the annular face 13b or the spherical face 13c should not be limited to the aforementioned methods.

Next, still another embodiment of the invention is described. Fig. 3 is a sectional view showing the essential portion of the embodiment.
This embodiment is characterized in that the seat face 13 is composed of two spherical faces 13d and 13e, which are coaxial with each other but have different apex angles. Specifically, the seat face 13 in this embodiment is composed of the first conical face 13d of an apex angle of 60 degrees leading to the downstream fuel passage 12, and the second conical face 13e made coaxial with the first conical face 13d and having an apex angle of 90 degrees and leading to the upstream fuel passage 11.

Moreover, the ball 2 makes, when seated, a linear contact at a position, as indicated by P1 in Fig. 3, with the first conical face 13d, and a linear contact at a position, as indicated by P2 in Fig. 3, with the second conical face 13e. According to the embodiment shown in Fig. 3, therefore, the contact area of the ball 2, when seated, with one conical face is extended to about two times as large as that of the conventional check valve, in which the ball makes the linear contact with one conical face. Accordingly, the stress to act on the ball 2 can be damped to suppress the cracking like those of the foregoing embodiments thereby to improve the durability.

Here, the aforementioned embodiment presented has the first and second conical faces 13d and 13e formed at the seating portion. However, these conical faces should not necessarily be limited to two in number but may be three or more. In this modification, the ball contacts with at least two of the conical faces so that the modification can achieve advantages similar to those of the foregoing embodiments.

## Claims

1. A check valve for a fuel pump, comprising:
a seat face formed on a fuel passage;
a valve member that includes a ball made of ceramics and is adapted to approach and leave the seat face; and
a spring for biasing the ball toward the seat face,
wherein the fuel passage is closed when the ball is seated on the seat face, and the fuel passage is opened when the ball is brought apart from the seat face by a pressure generated against the biasing force of the spring, and
wherein the ball seating portion of the seat face is formed into a curved face having a larger curvature than that of the ball, so that the ball and the seat face come into a band-shaped contact at the seating time.

2. The check valve according to claim 1, wherein the curved face is a shape of an annular face having a larger curvature than that of the ball.

3. The check valve according to claim 1, wherein the curved face is a spherical shape having a large curvature than that of the ball.

4. The check valve according to claim 3, wherein the spherical face forming the ball seating portion of the spherical face is formed by a ball sizing.

5. A check valve for a fuel pump, comprising:
a seat face formed on a fuel passage;
a valve member that includes a ball made of ceramics and is adapted to approach and leave the seat face; and
a spring for biasing the ball toward the seat face,
wherein the fuel passage is closed when the ball is seated on the seat face, and the fuel passage is opened when the ball is brought apart from the seat face by a pressure generated against the biasing force of the spring, and
wherein a portion of the seat face on which the ball is seated includes at least two conical faces having different apex angles and formed coaxially with the approaching and leaving direction of the ball, so that the ball makes, when seated, linear contact with at least two of the individual conical faces.
